# DEMANDE DE BREVET EUROPEEN

(11) **EP 4 657 212 A1**
(43) Date de publication de la demande: **03.12.2025**
(21) Numéro de dépôt: 25178965.7
(22) Date de dépôt: 27.05.2025
(51) Int. Cl.: G06F 3/01, G06F 3/03

(54) **PROCÉDÉ D'INTÉRACTION AVEC UN OBJET VIRTUEL, PROGRAMME L'UTILISANT ET DISPOSITIF DE RÉALITÉ IMMERSIVE**

(30) Priorité: 29.05.2024 FR 2405520
(71) Demandeur: Orange, 92130 Issy-les-Moulineaux (FR)
(72) Inventeur: BATAILLE, Guillaume, 92326 Chatillon (FR)

(57) **Abrégé**

L'invention concerne un procédé d'interaction avec un objet virtuel d'une réalité immersive, un programme l'utilisant et un dispositif de réalité immersive dans lequel un utilisateur peut interagir avec un objet virtuel.

Un objet de l'invention est un procédé d'interaction avec un objet virtuel reproduit par un dispositif de réalité immersive comportant :
- lorsqu'une main virtuelle associée à une main réelle d'un utilisateur du dispositif de réalité immersive est à proximité d'un objet virtuel, détecter un geste continu de la main réelle, la détection de geste continu déclenchant une préhension par la main virtuelle de l'objet virtuel.

Ainsi, un geste simple et continu est associé au déclenchement de la préhension de l'objet virtuel sans mettre la main réelle dans une position incompatible avec cette préhension en termes de perception par l'utilisateur.

## Description

### Domaine technique

L'invention concerne un procédé d'interaction avec un objet virtuel d'une réalité immersive, un programme l'utilisant et un dispositif de réalité immersive dans lequel un utilisateur peut interagir avec un objet virtuel.

### État de la technique

Aujourd'hui, il existe plusieurs technologies de réalité immersive, notamment :
- la réalité virtuelle qui plonge l'utilisateur dans un environnement totalement créé, qu'il soit imaginaire ou réel, mais qui ne correspond pas à sa réalité présente ;
- la réalité augmentée qui est une réalité enrichie, c'est-à-dire avec des informations ajoutées par rapport à la réalité de l'utilisateur ;
- la réalité mixte qui combine la réalité virtuelle et la réalité augmentée ;
- etc.

Dans l'ensemble de ces réalités immersives, un utilisateur, personne réelle, peut interagir avec des objets virtuels de ces réalités immersives. Pour interagir avec un objet virtuel, l'utilisateur peut soit utiliser des manettes d'interactions du système de réalité immersive, soit interagir avec sa main réelle nue. Dans ce deuxième cas, le système de réalité immersive est doté d'au moins une caméra apte à capter la main réelle de l'utilisateur permettant au système de réalité immersive de détecter une interaction de la main réelle nue captée avec l'objet virtuel.

Néanmoins, les techniques actuelles permettant l'interaction de la main réelle nue avec un objet virtuel sont nettement moins performantes qu'une manipulation physique d'un objet réel préhensible. En effet, l'utilisateur se heurte à des problèmes et/ou des incohérence de perception lors d'une tentative de manipulation d'un objet virtuel reproduit en réalité immersive par exemple par un casque de réalité immersive, une table semi-immersive, une salle immersive, un dispositif holographique, etc.

Notamment, des utilisateurs éprouvent des difficultés à interagir avec un objet virtuel en raison de l'absence de contact tangible avec l'objet virtuel. Cela entraine des erreurs, voire des absences d'interaction dans la réalité immersive et donc une expérience immersive dégradée qui peut entrainer une non-adoption de ces techniques immersives par les utilisateurs.

En outre, les dispositifs de réalité immersive ne détecte pas d'interactions avec les objets virtuels des utilisateurs cherchant à respecter la géométrie de l'objet virtuel lors de son interaction avec celui-ci car ces dispositifs de réalité immersive utilise actuellement des techniques d'interaction validant la prise en main virtuelle de l'objet virtuel si la main réelle se referme (les doigts de la main réelle de l'utilisateur se touchent) en entourant l'objet virtuel (éventuellement sans toucher l'objet virtuel), voire en traversant l'objet virtuel. Ainsi, il est rare que la position de la main réelle nécessaire pour valider la préhension de l'objet virtuel corresponde à une prise en main de l'objet virtuel. En effet, en fonction du diamètre de l'objet virtuel et du diamètre de la main réelle refermée, l'utilisateur n'aura pas tendance à commander la prise en main de l'objet virtuel ni en entourant avec la main réelle l'objet virtuel sans le toucher (dans le cas où le diamètre de l'objet virtuel est inférieur à celui de la main réelle refermée) ni en traversant l'objet virtuel avec la main réelle (dans le cas où le diamètre de l'objet virtuel est supérieur à celui de la main réelle refermée). Par conséquent, cela entraine là aussi des erreurs voire des absences d'interaction dans la réalité immersive et donc une expérience immersive dégradée qui peut entrainer une non-adoption de ces techniques immersives par les utilisateurs.

De plus, des problèmes similaires d'interaction se pose lorsque l'utilisateur tente de commander de relâcher l'objet virtuel. En effet, la position de la main réelle relâchant l'objet virtuel naturelle pour l'utilisateur n'est pas nécessairement associée à une commande de relâchement dans le système de réalité immersive entrainant une erreur d'interaction avec cet objet virtuel, notamment le fait que l'objet virtuel restant collé à la main de l'utilisateur est déplacé involontairement par l'utilisateur lors d'un mouvement de sa main réelle. Là également, les erreurs d'interaction dans la réalité immersive dégradent l'expérience immersive de l'utilisateur.

### Exposé de l'invention

Un des buts de la présente invention est de remédier à des inconvénients de l'état de la technique.

Un objet de l'invention est un procédé d'interaction avec un objet virtuel reproduit par un dispositif de réalité immersive comportant :
- lorsqu'une main virtuelle associée à une main réelle d'un utilisateur du dispositif de réalité immersive est à proximité d'un objet virtuel, détecter un geste continu de la main réelle, la détection de geste continu déclenchant une préhension par la main virtuelle de l'objet virtuel.

Ainsi, un geste simple et continu est associé au déclenchement de la préhension de l'objet virtuel sans mettre la main réelle dans une position incompatible avec cette préhension en termes de perception par l'utilisateur.

Avantageusement, le procédé d'interaction comporte :
- prendre l'objet virtuel avec la main virtuelle dès qu'un geste continu de la main réelle est détecté.

Avantageusement, le procédé d'interaction comporte :
- lorsque la main virtuelle tient un objet virtuel, détecter l'interruption du geste continu de la main réelle, la détection d'interruption de geste continu déclenchant la fin de la préhension de l'objet virtuel par la main virtuelle.

Ainsi, la fin de ce geste simple et continu est associée au déclenchement du relâchement de l'objet virtuel dès que la main réelle est dans une position compatible avec ce relâchement de l'objet virtuel en termes de perception par l'utilisateur.

Avantageusement, le procédé d'interaction comporte :
- lâcher l'objet virtuel tenu par la main virtuelle dès qu'une interruption du geste continu de la main réelle est détectée.

Avantageusement, la préhension de l'objet virtuel par la main virtuelle est effectuée en fonction de l'orientation de la paume de la main virtuelle par rapport à l'objet virtuel lors de la détection du geste continu.

Ainsi, la prise en main virtuelle de l'objet virtuel est naturelle en termes de position de la main réelle pour l'utilisateur.

Avantageusement, le procédé d'interaction comporte :
- lorsque la main virtuelle tient un objet virtuel, détecter un geste de la main réelle complémentaire du geste continu détecté, la détection du geste complémentaire déclenchant une rotation de l'objet virtuel dans la main virtuelle.

Avantageusement, le geste continu détecté est un contact du pouce et de l'index de la main réelle.

Ainsi, le geste continu est simple et n'est pas sujet à une perception distincte de l'utilisateur. Cela évite le risque d'erreur et/ou d'absence de prise en main virtuelle de l'objet virtuel par l'utilisateur.

Avantageusement, le geste complémentaire détecté est un glissement du pouce contre l'index de la main réelle.

Ainsi, le geste continu est simple et n'est pas sujet à une perception distincte de l'utilisateur. Cela évite le risque d'erreur et/ou d'absence de manipulation virtuelle de l'objet virtuel par l'utilisateur.

Avantageusement, le procédé d'interaction comporte :
- allonger le bras virtuel rattaché à une main virtuelle associée à une main réelle se dirigeant vers un objet virtuel distant.

Ainsi, cela facilite une interaction virtuelle transparente pour l'utilisateur avec à la fois des objets virtuels proches et des objets virtuels distants.

Avantageusement, le procédé d'interaction comporte :
- utiliser une cartographie non-linéaire entre le mouvement de la main réelle capté dans l'environnement réel et le mouvement de la main virtuelle dans l'environnement immersive, le mouvement de la main virtuelle étant fonction du mouvement capté de la main réelle.

Ainsi, cela rend l'interaction virtuelle de l'utilisateur avec à la fois des objets virtuels proches et des objets virtuels distants intuitive, sans à coup (« seamless » en anglais) et simple d'utilisation.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un dispositif de réalité immersive et étant conçus pour commander l'exécution des différentes étapes de ce procédé.

L'invention vise donc aussi un programme comprenant des instructions de code de programme pour l'exécution des étapes du procédé d'interaction selon l'invention.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est également un dispositif de réalité immersive comportant :
- un dispositif de reproduction d'un objet virtuel ;
- une caméra apte à capter des mains réelles d'un utilisateur du dispositif de réalité immersive ;
- un détecteur de geste apte à détecter un geste continu de la main réelle, la détection de geste continu déclenchant une préhension par la main virtuelle de l'objet virtuel lorsqu'une main virtuelle associée à une main réelle d'un utilisateur du dispositif de réalité immersive est à proximité d'un objet virtuel.

### Brève description des dessins

Les caractéristiques et avantages de l'invention apparaîtront plus clairement à la lecture de la description, faite à titre d'exemple, et des figures s'y rapportant qui représentent:
[Fig.1], un schéma simplifié d'un procédé d'interaction avec un objet virtuel selon l'invention,
[Fig.2], un schéma simplifié d'un procédé de réalité immersive selon l'invention,
[Fig.3], un schéma simplifié d'un dispositif de réalité immersive selon l'invention,
[Fig.4a], un schéma simplifié d'un premier cas d'usage de l'invention lorsque l'utilisateur effectue un geste continu avec sa main réelle,
[Fig.4b], un schéma simplifié d'un deuxième cas d'usage de l'invention lorsque l'utilisateur effectue un geste continu avec sa main réelle,
[Fig.5a], un schéma simplifié d'un cas d'usage de l'invention lorsque l'utilisateur déplace sa main réelle pendant un geste continu de cette main réelle,
[Fig.5b], un schéma simplifié d'un cas d'usage de l'invention lorsque l'utilisateur interromps un geste continu avec sa main réelle.

### Description des modes de réalisation

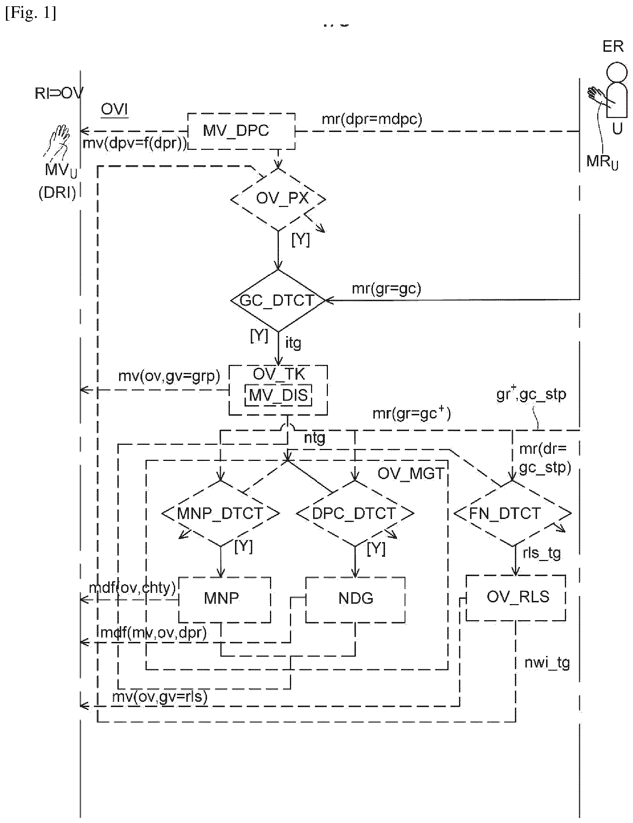

La [Fig.1] illustre un schéma simplifié d'un procédé d'interaction avec un objet virtuel selon l'invention.

Le procédé d'interaction avec un objet virtuel OVI reproduit par un dispositif de réalité immersive DRI comportant :
- lorsqu'une main virtuelle MV_{U} associée à une main réelle MR_{U} d'un utilisateur U du dispositif de réalité immersive DRI est à proximité d'un objet virtuel OV : OV_PX= [Y], détecter un geste continu de la main réelle GRP_DTCT, la détection de gestion continu GC_DTCT déclenchant itg une préhension OV_TK par la main virtuelle MV_{U} de l'objet virtuel OV.

En particulier le geste continu est un geste de contact d'une partie de la main réelle avec une autre partie de la même main réelle. Ainsi, le geste continu permet de recréer la sensation de toucher que l'utilisateur ne peut pas ressentir en touchant un objet virtuel.

En particulier, le procédé d'interaction OVI comporte :
- prendre OV_TK l'objet virtuel OV avec la main virtuelle MV_{U} dès qu'un geste continu gc de la main réelle MR_{U} est détecté GC_DTCT.

En particulier, le procédé d'interaction OVI comporte :
- lorsque la main virtuelle MV_{U} tient un objet virtuel OV, détecter FN_DTCT l'interruption du geste continu gc_stp de la main réelle MR_{U}, la détection d'interruption FN_DTCT déclenchant rls_tg la fin de la préhension de l'objet virtuel OV_RLS par la main virtuelle MV_{U}.

En particulier, le procédé d'interaction OVI comporte :
- lâcher OV_RLS l'objet virtuel OV tenu par la main virtuelle MV_{U} dès qu'une interruption du geste continu de la main réelle est détectée FN_DTCT.

En particulier, la préhension de l'objet virtuel OV_TK par la main virtuelle MV_{U} est effectuée en fonction de l'orientation de la paume de la main virtuelle MV_{U} par rapport à l'objet virtuel OV lors de la détection du geste continu GC_DTCT.

En particulier, le procédé d'interaction OVI comporte :
- lorsque la main virtuelle MV_{U} tient un objet virtuel OV, détecter un geste de la main réelle complémentaire du geste continu détecté MNP_DTCT, la détection du geste complémentaire MNP_DTCT déclenchant une rotation MNP de l'objet virtuel OV dans la main virtuelle MV_{U}.

En particulier, le geste continu détecté gc est un contact du pouce et de l'index de la main réelle.

En particulier, le geste complémentaire détecté gc+ est un glissement du pouce contre l'index de la main réelle.

En particulier, le procédé d'interaction OVI comporte :
- allonger BV_NL le bras virtuel BV_{U} rattaché à une main virtuelle MV_{U} associée à une main réelle MR_{U} se dirigeant vers un objet virtuel OV distant.

En particulier, le procédé d'interaction comporte :
- utiliser une cartographie non-linéaire MPNL entre le mouvement dpr de la main réelle capté mr dans l'environnement réel ER et le mouvement de la main virtuelle mv dans l'environnement immersive RI, le mouvement dpv de la main virtuelle mv étant fonction du mouvement capté de la main réelle dpr.

Un utilisateur U utilise un dispositif de réalité immersive DRI au moyen duquel il visualise au moins un objet virtuel OV de l'environnement immersif, aussi nommé réalité immersive, ***RI: RI*** ⊃ ***OV.***

Le dispositif de réalité immersive DRI permet à l'utilisateur U d'interagir avec des objets virtuels OV de la réalité immersive RI notamment au moyen des mains réelles MR_{U} de l'utilisateur U. Afin de faciliter l'interaction de l'utilisateur U avec un objet virtuel OV de la réalité immersive RI, des mains virtuelles MV_{U} sont générées dans la réalité immersive associées aux mains réelles MR_{U} de l'utilisateur U.

Ainsi, lorsque l'utilisateur U déplace une de ses mains réelles MR_{U} pour la rapprocher d'un objet virtuel OV, la main virtuelle associée MV_{U} se déplace de la même manière dans la réalité immersive RI vers l'objet virtuel OV.

En particulier, le procédé d'interaction OVI reçoit des données captées mr relatives à la main réelle MR_{U}. Dans l'exemple ci-dessus, dans lequel une main réelle MR_{U} se déplace vers un objet virtuel OV, les données captées relatives à la main réelle mr comporte des données de déplacement relatives à la main réelle dpr correspondant au déplacement de la main réelle mr : mr(dpc=mdpc).

En particulier, le procédé d'interaction OVI comporte :
déplacer MV_DPC la main virtuel MV_{U} en fonction des données de déplacement de la main dpr.

Ainsi, le procédé d'interaction OVI fournit à la réalité immersive la commande de déplacement mv indiquant le déplacement de la main virtuelle dpv en fonction des données de déplacement de la main dpr : mv(dpv= f(dpr)).

Dans le cas où l'objet virtuel OV se situe dans un plan de la réalité immersive RI trop éloigné du premier plan dans lequel se trouve l'utilisateur U pour que celui-ci puisse l'atteindre avec l'une de ses mains réelles MR_{U}, le procédé d'interaction OVI allonge BV_NL (non illustré) le bras virtuel BV_{U} (non illustré) rattaché à la main virtuelle MV_{U} associée à la main réelle MR_{U} avec laquelle l'utilisateur tente d'atteindre cet objet virtuel OV.

Eventuellement, l'allongement du bras virtuel BV_NL utilise utiliser une cartographie non-linéaire MPNL (non illustré) entre le mouvement dpr de la main réelle capté mr dans l'environnement réel ER et le mouvement de la main virtuelle mv dans l'environnement immersive RI, le mouvement dpv de la main virtuelle mv étant fonction du mouvement capté de la main réelle dpr.

En particulier, le procédé d'interaction OVI comporte une détection de proximité avec un objet virtuel OV_PX. La détection de proximité OV_PX est notamment mise en œuvre après chaque déplacement de la main réelle MR_{U}. La détection de proximité OV_PX est effectuée en fonction de la position de la main virtuelle mv_pos associée à la main réelle et de la position de l'objet virtuel ov_pos.

La position de la main virtuelle mv_pos est fonction de la position de la main réelle mr_pos et, le cas échéant, de l'allongement du bras virtuel bv_nl. En particulier, lorsque la position d'une main est donnée en coordonnée polaire centrée sur l'utilisateur U, les angles des coordonnées polaires de la main virtuelle sont égaux aux des coordonnées polaires de la main réelle, et la distance de la main virtuelle par rapport au tronc de l'utilisateur U dv est égale à la distance de la main réelle par rapport au tronc de l'utilisateur U dr, voire à la distance allongée dnlv déterminée en fonction de la position de l'objet virtuel OV le plus proche dont les angles des coordonnées polaires sont identiques à ceux de la main réelle.

Le cas échant, la détection de proximité OV_PX tient donc compte de la position de la main virtuelle lorsque le bras virtuel est allongé.

Si une main virtuelle est proche d'un objet virtuel OV_PX=[Y], alors le procédé d'interaction OVI détecte GC_DTCT si l'utilisateur U effectue avec la main réelle associée un geste continu gc. En particulier, le procédé d'interaction OVI utilise les données captées relatives à la main réelle mr qui comporte des données relatives aux gestes effectuées par la main réelle gr : mr(gr). Ainsi, la détection de geste continu GC_DTCT consiste notamment à évaluer si les données captées relatives à la main réelle mr dont les données relatives aux gestes effectuées par la main réelle gr correspondent à un geste continu: mr(gr=gc).

Le geste continu gc est notamment un geste distinct d'un geste voisin d'un geste de préhension de l'objet virtuel OV, notamment le geste de prendre l'objet en se touchant les doigts qui peut être inapproprié en fonction du diamètre de l'objet virtuel.

Le geste continu gc est un parmi les gestes suivants :
- le pouce touche l'index,
- le pouce touche la paume de la main ;
- la main est positionnée en poing fermé ;
- etc.

En particulier, si un geste continu est détecté GC_DTCT = [Y] alors le procédé d'interaction OVI déclenche une interaction itg de l'utilisateur U avec l'objet virtuel OV, notamment au moyen de sa main réel MR_{U}. L'interaction déclenchée itg est une prise en main OV_TK de l'objet virtuel par la main virtuelle MV_{U} de l'utilisateur U.

La prise en main OV_TK ancre la position de l'objet virtuel OV à la position de la main virtuelle MVU : ov_pos=f(mv_pos). Ainsi, lorsque l'utilisateur U déplace sa main réelle MR_{U}, la main virtuelle MV_{U} associée est déplacée en conséquence et l'objet OV aussi puisque sa position est ancrée sur celle de la position de la main virtuelle. Le cas échéant, lorsque le bras virtuel est allongé lors de la prise en main (OV_TK), l'évolution de la distance de l'objet virtuel OV avec l'utilisateur U est proportionnelle à l'évolution de la distance de la main réelle MR_{U} de l'utilisateur U avec son tronc.

En particulier, la prise en main de l'objet virtuel OV_TK comporte :
- modifier le geste de la main virtuelle MV_DIS.

Notamment, le geste modifié gv de la main virtuelle MV_{U} est un geste de préhension grp autour de l'objet virtuel OV.

Notamment, le procédé d'interaction OVI fournit des données relatives à la main virtuelle mv effectuant le geste modifié gv de la main virtuelle en un geste de préhension grp autour de l'objet virtuel OV: mv(ov,gv=grp), ov correspondant aux données relatives à l'objet virtuel OV, à la réalité immersive RI.

L'utilisateur U continuant à effectuer le geste continu gc avec une main réelle MR_{U}, plusieurs gestes gr de la main réelle MRU peuvent être capter et donc détecter.

Dans un premier cas, le geste gr peut être un geste complémentaire au geste continu gc+, c'est-à-dire que l'utilisateur U continu le geste continu gc avec la main réelle MR_{U} et y ajoute le geste complémentaire gc+.

En particulier, le procédé d'interaction OVI comporte
- lorsque la main virtuelle MV_{U} tient un objet virtuel OV, détecter un geste de déplacement de la main réelle complémentaire du geste continu détecté DPC_DTCT, la détection du geste complémentaire de déplacement DPC_DTCT déclenchant un déplacement NDG de l'objet virtuel OV avec la main virtuelle MV_{U}.

En particulier, le procédé d'interaction OVI comporte le déplacement NDG de l'objet virtuel OV avec la main virtuelle MV_{U}. Notamment, le déplacement NDG fournit des données relatives à une modification de la main virtuelle mv et de l'objet virtuel ov en fonction du déplacement de la main réelle détecté dpr : mdf(mv,ov,dpr).

En particulier, le procédé d'interaction OVI comporte
- lorsque la main virtuelle MV_{U} tient un objet virtuel OV, détecter un geste de la main réelle fixe complémentaire du geste continu détecté MNP_DTCT, la détection du geste complémentaire fixe MNP_DTCT déclenchant une rotation MNP de l'objet virtuel OV avec la main virtuelle MV_{U}.

En particulier, le procédé d'interaction OVI comporte la rotation MNP de l'objet virtuel OV avec la main virtuelle MV_{U}. Notamment, la rotation MNP fournit des données relatives à la modification de de l'objet virtuel ov en fonction du geste de la main réelle détecté chty: mdf(ov,chty).

En particulier, le procédé d'interaction OVI comporte
- lorsque la main virtuelle MV_{U} tient un objet virtuel OV, détecter un geste de la main réelle complémentaire gc+ du geste continu détecté MNP_DTCT, DPC_DTCT, la détection du geste complémentaire MNP_DTCT déclenchant une gestion OV_MGT de l'objet virtuel OV de la main virtuelle MV_{U}.

Notamment, ce geste complémentaire gc+ permet une gestion OV_MGT de l'objet virtuel OV tenu par la main virtuel MV_{U}. Eventuellement, la gestion OV_MGT de l'objet virtuel OV tenu par la main virtuel MV_{U} comporte la détection du geste complémentaire de déplacement DPC_DTCT et/ou le déplacement NDG et/ou la détection du geste complémentaire fixe MNP_DTCT et/ou la rotation MNP.

Le geste complémentaire gc+ est un parmi les gestes suivants :
- un déplacement d'un des doigts relativement aux autres, tels que :
   + le pouce se déplace le long de l'index(par exemple, pouce- phalange 0 ou métacarpe = vitesse de rotation nulle, ..., pouce - phalange 3 ou phalange distale= vitesse de rotation maximale; ou
   pouce- phalange 0 ou métacarpe = angle de rotation nulle, pouce- phalange 0 ou phalange proximale= angle de rotation de 90°, pouce-phalange 2 ou phalange intermédiaire= angle de rotation de 180°, pouce- phalange 0 ou phalange distale= angle de rotation de 270° ; etc.) ;
   + le pouce se déplace contre la paume de la main pour aller d'un doigt au suivant (par exemple, pouce-index = vitesse de rotation nulle, ..., pouce - auriculaire = vitesse de rotation maximale; ou
   pouce-index = angle de rotation nulle, pouce-majeur = angle de rotation de 90°, pouce-annulaire = angle de rotation de 180°, pouce-auriculaire = angle de rotation de 270° ; etc.) ;
   + la pouce se déplace sur le poing pour aller d'un doigt au suivant (par exemple, pouce-index = vitesse de rotation nulle, ..., pouce - auriculaire = vitesse de rotation maximale; ou
   pouce-index = angle de rotation nulle, pouce-majeur = angle de rotation de 90°, pouce-annulaire = angle de rotation de 180°, pouce-auriculaire = angle de rotation de 270° ; etc.) ;
- etc.

Dès que le geste réel gr a été mis en œuvre virtuellement MNP, NDG alors le procédé d'interaction OVI attend ntg le geste suivant.

En particulier, le procédé d'interaction OVI comporte
- lorsque la main virtuelle MV_{U} tient un objet virtuel OV, détecter FN_DTCT l'interruption du geste continu gc_stp de la main réelle MR_{U}, la détection d'interruption FN_DTCT déclenchant rls_tg la fin de la préhension de l'objet virtuel OV_RLS par la main virtuelle MV_{U}.

En particulier, le procédé d'interaction OVI comporte :
- lâcher OV_RLS l'objet virtuel OV tenu par la main virtuelle MV_{U} dès qu'une interruption du geste continu de la main réelle est détectée FN_DTCT.

Dès que l'objet virtuel OV a été relâché alors le procédé d'interaction OVI attend nwi_tg le geste continu suivant pour interagir soit à nouveau avec cet objet virtuel, soit avec un autre objet virtuel de la réalité immersive.

Un mode de réalisation particulier du procédé d'interaction OVI est un programme comprenant des instructions de code de programme pour l'exécution des étapes du procédé d'interaction OVI selon l'invention lorsque ledit programme est exécuté par un processeur.

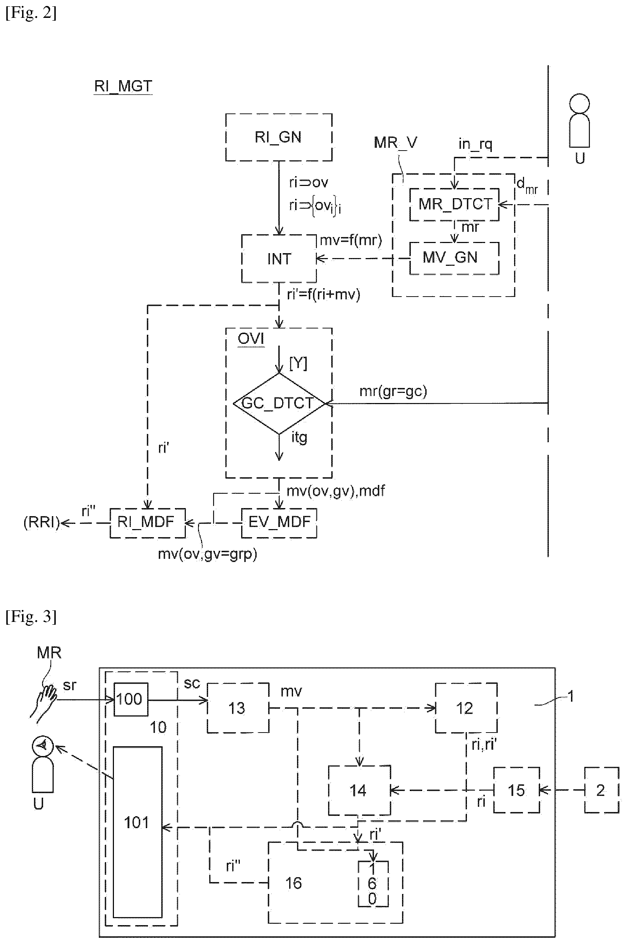

La [Fig.2] illustre un schéma simplifié d'un procédé de réalité immersive selon l'invention.

Le procédé de réalité immersive RI_MGT, aussi nommé procédé de gestion de réalité immersive, la réalité immersive RI comportant au moins un objet virtuel OV. Le procédé de réalité immersive RI_MGT comporte :
- lorsqu'une main virtuelle MV_{U} associée à une main réelle MR_{U} d'un utilisateur U d'un dispositif de réalité immersive DRI est à proximité d'un objet virtuel OV : OV_PX= [Y], détecter un geste continu de la main réelle GRP_DTCT, la détection de gestion continu GC_DTCT déclenchant itg une préhension OV_TK par la main virtuelle MV_{U} de l'objet virtuel OV ; et
- fournir des données relatives à la réalité immersive ri, ri', ri" à une reproduction de réalité immersive. RRI.

En particulier, le procédé de réalité immersive RI_MGT comporte :
- générer RI_GN une réalité immersive comportant au moins un objet virtuel OV. Notamment, la génération de réalité immersive RI_GN fournit des données relatives à la réalité immersive ri, comportant éventuellement des données relatives à un objet virtuel ov ou plusieurs objets virtuels {***ovᵢ***}***ᵢ*** : ***ri*** ⊃ ***ov, ri*** ⊃ {*ovᵢ*}*ᵢ*.

En particulier, le procédé de réalité immersive RI_MGT comporte :
- détecter MR_DTCT une voire des mains réelles MR_{U} d'un utilisateur U.

En particulier, la détection des mains réelles MR_DTCT récupère des données captées des mains réelles dₘᵣ et fournit les données relatives aux mains réelles mr fonction des données captées dmr.

En particulier, lorsqu'un utilisateur U accède à la réalité immersive RI, il requiert in_rq, notamment au moyen d'une interface d'entrée (non illustrée) au procédé de réalité immersive RI_MGT d'intégrer la réalité immersive. Cette requête d'intégration de la réalité immersive in_rq déclenche la détection MR_DTCT d'une voire des mains réelles MR_{U} de l'utilisateur U.

En particulier, le procédé de réalité immersive RI_MGT comporte :
- générer MV_GN des mains virtuelles MV_{U} associées à l'utilisateur U.

Notamment, les mains virtuelles MV_{U} sont associées aux mains réelles MR_{U} de l'utilisateur U. Le cas échéant, les données relatives aux mains virtuelles fournies mv par la génération de mains virtuelles MV_GN sont fonction de données relatives aux mains réelles mr : mv=f(mr), par exemple fournies par la détection de mains réelles MR_DTCT.

En particulier, le procédé de réalité immersive RI_MGT comporte :
- virtualiser MR_V les mains réelles d'un utilisateur U.
La virtualisation des mains réelles MR_V fournit des données relatives à des mains virtuelles mv en fonction de données relatives aux mains réelles mr : mv=f(mr). Notamment, la virtualisation des mains réelles MR_V comporte une détection de mains réelles MR_DTCT et/ou une génération de mains virtuelles MV_GN.

En particulier, le procédé de réalité immersive RI_MGT comporte :
- intégrer des mains virtuelles MV_{U} associées à l'utilisateur U dans la réalité immersion RI.
L'intégration INT fournit alors une réalité immersive modifiée RI' dans laquelle les mains virtuelles MV_{U} ont été intégrées, notamment des données relatives à la réalité immersive modifiée ri' comportant des données relatives aux mains virtuelles MV_{U} intégrées mv : ri'=f(ri+mv).

Si une main virtuelle est proche d'un objet virtuel OV_PX=[Y], alors le procédé d'interaction OVI détecte GC_DTCT si l'utilisateur U effectue avec la main réelle associée un geste continu gc. En particulier, le procédé d'interaction OVI utilise les données captées relatives à la main réelle mr qui comporte des données relatives aux gestes effectuées par la main réelle gr : mr(gr). Ainsi, la détection de geste continu GC_DTCT consiste notamment à évaluer si les données captées relatives à la main réelle mr dont les données relatives aux gestes effectuées par la main réelle gr correspondent à un geste continu: mr(gr=gc).

En particulier, si un geste continu est détecté GC_DTCT = [Y] alors le procédé d'interaction OVI déclenche une interaction itg de l'utilisateur U avec l'objet virtuel OV, notamment au moyen de sa main réel MR_{U}. L'interaction déclenchée itg est une prise en main OV_TK de l'objet virtuel par la main virtuelle MV_{U} de l'utilisateur U.

En particulier, le procédé de réalité immersive RI_MGT comporte :
- interagir avec un objet virtuel reproduit d'une réalité immersive OVI.

Notamment, l'interaction avec un objet virtuel OVI étant notamment le procédé d'interaction tel qu'illustré par la [Fig.1].

Eventuellement, le procédé de réalité immersive RI_MGT et/ou le procédé d'interaction OVI comporte une ou plusieurs des étapes suivantes :
- prendre OV_TK l'objet virtuel OV avec la main virtuelle MV_{U} dès qu'un geste continu gc de la main réelle MR_{U} est détecté GC_DTCT. Notamment, la prise en main OV_TK fournit des données relatives à la main virtuelle mv effectuant le geste modifié gv de la main virtuelle en un geste de préhension grp autour de l'objet virtuel OV: mv(ov, gv), mv(ov,gv=grp), ov correspondant aux données relatives à l'objet virtuel OV, à la réalité immersive RI ;
- manipuler MNP l'objet virtuel OV avec la main virtuelle MV_{U}, notamment faire tourner l'objet virtuel OV dans la main virtuelle MV_{U}. Par exemple, la manipulation MNP fournit des données relatives à la modification de de l'objet virtuel ov en fonction du geste de la main réelle détecté chty: mdf, mdf(ov,chty) ;
- déplacer NDG l'objet virtuel OV avec la main virtuelle MV_{U}. Notamment, le déplacement NDG fournit des données relatives à une modification de la main virtuelle mv et de l'objet virtuel ov en fonction du déplacement de la main réelle détecté dpr : mdf, mdf(mv,ov,dpr) ;
- lâcher OV_RLS l'objet virtuel OV tenu par la main virtuelle MV_{U} dès qu'une interruption du geste continu de la main réelle est détectée FN_DTCT. Notamment, le relâchement OV_RLS fournit des données relatives à la main virtuelle mv effectuant le geste modifié gv de la main virtuelle en un geste de relâchement rls de l'objet virtuel OV: mv(ov, gv), mv(ov,gv=rls), ov correspondant aux données relatives à l'objet virtuel OV, à la réalité immersive RI.

En particulier, le procédé de réalité immersive RI_MGT comporte :
- modifier un ou plusieurs éléments virtuels EV_MDF de la réalité immersive RI.
Les éléments virtuels de la réalité immersive comporte notamment un ou plusieurs objets virtuels OV et une ou plusieurs parties virtuelles associées à l'utilisateur U, par exemple mains virtuelles MV_{U}, bras virtuels BV_{U}, etc.

Dans un premier mode de réalisation, la modification d'éléments virtuels EV_MDF est effectuée directement dans la réalité immersive ri' comportant les mains virtuelles.

Dans un deuxième mode de réalisation, la modification d'éléments virtuels EV_MDF fournit des données relatives aux éléments virtuels modifiés, notamment aux données relatives aux mains virtuelles mv et, le cas échéant, aux données relatives à l'objet virtuel ov tenu par l'utilisateur U.

Dans ce deuxième mode de réalisation, le procédé de réalité immersive RI_MGT comporte :
- modifier la réalité immersive RI_MDF.

En particulier, la modification de réalité immersive remplace les données relatives aux éléments virtuels modifiées dans les données relatives à la réalité immersive ri' par les données modifiées relatives à ces éléments virtuels fournit par la modification d'éléments virtuels EV_MDF. La modification de réalité immersive fournit une réalité immersive modifiée ri" tenant compte notamment de la prise en main de l'objet virtuel à la reproduction de réalité immersive RRI.

Un mode de réalisation particulier du procédé de réalité immersive est un programme comprenant des instructions de code de programme pour l'exécution des étapes du procédé de réalité immersive selon l'invention lorsque ledit programme est exécuté par un processeur.

L'invention vise aussi un support. Le support d'informations peut être n'importe quelle entité ou dispositif capable de stocker un programme selon l'invention. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessus. Un composant matériel correspond à tout élément d'un ensemble matériel (ou hardware) apte à mettre en œuvre une fonction ou un ensemble de fonctions.

La [Fig.3] illustre un schéma simplifié d'un dispositif de réalité immersive selon l'invention.

Le dispositif de réalité immersive 1 comportant :
- un dispositif de reproduction 101 d'un objet virtuel ;
- une caméra 100 apte à capter des mains réelles d'un utilisateur du dispositif de réalité immersive ;
- un détecteur de geste 160 apte à détecter un geste continu gc de la main réelle, le détecteur de geste continu est apte à déclencher une préhension par la main virtuelle de l'objet virtuel lorsqu'une main virtuelle associée à une main réelle d'un utilisateur du dispositif de réalité immersive est à proximité d'un objet virtuel.

En particulier, un utilisateur U utilise une réalité immersive RI reproduite par le dispositif de reproduction 101.

Notamment, l'utilisateur U interagit avec cette réalité immersive RI, par exemple avec le dispositif de réalité immersive 1, au moyen de ses mains réelles MR_{U}.

En particulier, au moins une caméra 100 est apte à capter des données relatives à l'utilisateur sr et fournit les données captée sc. Ces données captées sc comportent notamment des données relatives aux mains réelles mr.

En particulier, le dispositif de réalité immersive 1 comporte une interface utilisateur 10 comportant :
- le dispositif de reproduction 101 d'un objet virtuel ; et/ou
- le caméra 100 apte à capter des mains réelles d'un utilisateur du dispositif de réalité immersive.

En particulier, le dispositif de réalité immersive 1 comporte un générateur de main virtuelle 13 apte à fournir des données relatives à des mains virtuelles mv associées à l'utilisateur U, notamment à ses mains réelles.

En particulier, un générateur de réalité immersive 2, 12 est apte à fournir des données relatives à une réalité immersive ri, ri' comportant des données relatives à un ou plusieurs objets virtuels ov.

Dans un mode de réalisation particulier, le dispositif de réalité immersive 1 comporte le générateur de réalité immersive 12. En particulier, le générateur de réalité immersive 12 est apte à recevoir les données relatives aux mains virtuelles mv et les intègre aux données de réalité immersive ri pour fournir des données de réalité immersive ri' comportant en outre les données relatives aux mains virtuelles mv.

Dans un mode de réalisation alternatif, le dispositif de réalité immersive 1 est apte à être connecter avec un générateur de réalité immersive 2 distinct du dispositif de réalité immersive 1. Eventuellement, le dispositif de réalité immersive 1 comporte une interface de communication 15 apte à connecter le dispositif de réalité immersive 1 avec le générateur de réalité immersive 2, notamment via un réseau de communication 3 (non illustré). L'interface de communication 15 comporte notamment une connectique d'un câble de communication, un récepteur via le réseau de communication 3, etc. Dans ce cas, le générateur de réalité immersive 2 est apte à fournir des données relatives à une réalité immersive ri, et l'interface de communication 15 est apte à relayer dans le dispositif de réalité immersive 1 les données relatives à une réalité immersive ri reçues.

En particulier, le dispositif de réalité immersive 1 comporte un intégrateur de mains virtuelles 14 apte à intégrer les données relatives aux mains virtuelles dans les données de réalité immersive ri fournies par le générateur de réalité immersive 12, 2.

En particulier, le dispositif de réalité immersive 1 comporte :
- un dispositif d'interaction 16 apte à mettre en œuvre une interaction avec un objet virtuel reproduit dans une réalité immersive.

Notamment, le dispositif d'interaction avec un objet virtuel 16 comporte une mémoire stockant le procédé d'interaction OVI tel qu'illustré par la [Fig.1], et un processeur mettant en œuvre les instructions du procédé d'interaction.

Eventuellement, le dispositif de réalité immersive 1 et/ou le dispositif d'interaction 16 comporte un ou plusieurs des dispositifs suivants (non illustrés):
- un dispositif de préhension (en anglais « handling device ») apte à prendre un objet virtuel OV avec une main virtuelle MV_{U} dès qu'un geste continu gc de la main réelle MR_{U} est détecté. Notamment, le dispositif de préhension est apte à fournir des données relatives à la main virtuelle mv effectuant le geste modifié gv de la main virtuelle en un geste de préhension grp autour de l'objet virtuel OV: mv(ov, gv), mv(ov,gv=grp), ov correspondant aux données relatives à l'objet virtuel OV, à la réalité immersive RI ;
- un dispositif de manipulation apte à manipuler un objet virtuel OV avec une main virtuelle MV_{U}, notamment apte à faire tourner l'objet virtuel OV dans la main virtuelle MV_{U}. Par exemple, le dispositif de manipulation est apte à fournir des données relatives à la modification de de l'objet virtuel ov en fonction du geste de la main réelle détecté chty: mdf, mdf(ov,chty) ;

- un dispositif de déplacement apte à déplacer un objet virtuel OV avec une main virtuelle MV_{U}. Notamment, le dispositif de déplacement est apte à fournir des données relatives à une modification de la main virtuelle mv et de l'objet virtuel ov en fonction du déplacement de la main réelle détecté dpr : mdf, mdf(mv,ov,dpr) ;
- un dispositif de relâchement apte à relâcher l'objet virtuel OV tenu par la main virtuelle MV_{U} dès qu'une interruption du geste continu de la main réelle est détectée FN_DTCT. Notamment, le dispositif de relâchement est apte à fournir des données relatives à la main virtuelle mv effectuant le geste modifié gv de la main virtuelle en un geste de relâchement rls de l'objet virtuel OV: mv(ov, gv), mv(ov,gv=rls), ov correspondant aux données relatives à l'objet virtuel OV, à la réalité immersive RI.

En particulier, le dispositif de réalité immersive 1 et/ou le dispositif d'interaction 16 comporte :
- un modificateur d'éléments virtuels apte à modifier un ou plusieurs éléments virtuels de la réalité immersive.

Les éléments virtuels de la réalité immersive comporte notamment un ou plusieurs objets virtuels OV et une ou plusieurs parties virtuelles associées à l'utilisateur U, par exemple mains virtuelles MV_{U}, bras virtuels BV_{U}, etc.

Dans un premier mode de réalisation, le modificateur d'éléments virtuels est apte à effectuer la modification directement dans la réalité immersive ri' comportant les mains virtuelles.

Dans un deuxième mode de réalisation, le modificateur d'éléments virtuels est apte à fournir des données relatives aux éléments virtuels modifiés, notamment aux données relatives aux mains virtuelles mv et, le cas échéant, aux données relatives à l'objet virtuel ov tenu par l'utilisateur U.

Dans ce deuxième mode de réalisation, le dispositif de réalité immersive 1 et/ou le dispositif d'interaction 16 comporte :
- un modificateur de réalité immersive.

En particulier, le modificateur de réalité immersive est apte à remplacer les données relatives aux éléments virtuels modifiées dans les données relatives à la réalité immersive ri' par les données modifiées relatives à ces éléments virtuels fournit par le modificateur d'éléments virtuels. Le modificateur de réalité immersive est apte à fournir une réalité immersive modifiée ri" tenant compte notamment de la prise en main de l'objet virtuel au dispositif de reproduction de réalité immersive 101.

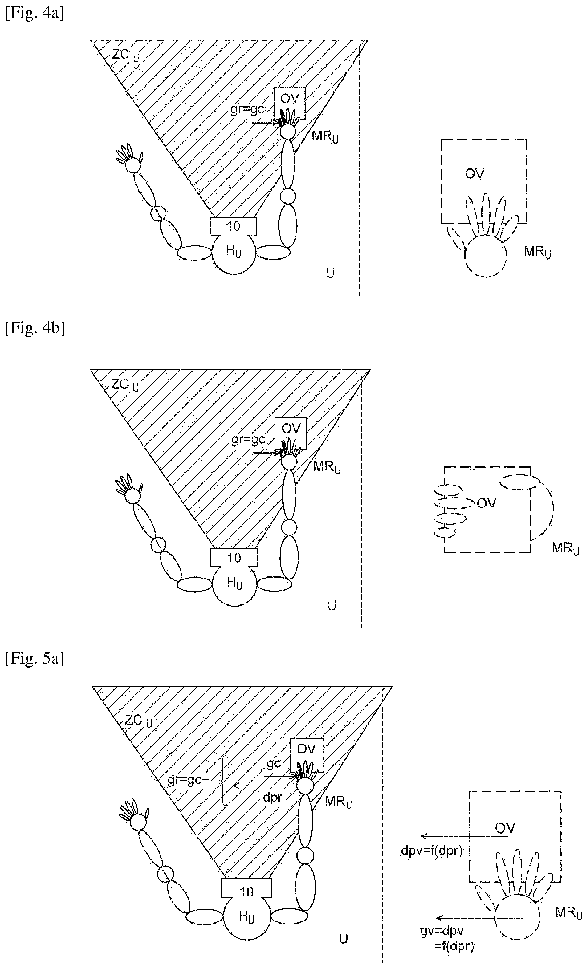

Les figures 4a et 4b montrent deux modes de préhension virtuelle déclenchées par l'invention lorsque l'utilisateur effectue un geste continu avec sa main réelle.

L'utilisateur U est représenté vue du dessus. On voit sa tête H_{U}, ses épaules, ses bras et ses mains. Il est équipé d'un dispositif de réalité immersive 1 comportant une interface homme machine 10 notamment sous forme de casque de réalité immersive (ou HDM pour « Head Mounted Display » en anglais).

L'interface homme machine 10 dispose notamment d'une zone de traque des mains illustrée par le cône hachurée ZC_{U}. Cette zone de traque des mains est fonction des au moins une caméra équipant le dispositif de réalité immersive 1.

Dans ces deux cas, l'utilisateur U effectue un geste gr avec sa main réelle MR_{U}, en l'occurrence un geste continu gc alors que sa main réelle MR_{U} est à proximité, voire sur, un objet virtuel OV. Le geste continu gc illustré par les figures 4a et 4b est que le pouce touche l'index comme le montre la partie gauche de ces figures.

La [Fig.4a] illustre un schéma simplifié d'un premier cas d'usage de l'invention lorsque l'utilisateur effectue un geste continu avec sa main réelle.

Dans ce premier cas d'usage, la main virtuelle MV_{U} garde la même posture que la main réelle MR_{U} associée, en l'occurrence à plat au-dessus de l'objet virtuel VR. Le geste continu gc déclenche alors une association de l'objet virtuel OV avec la main virtuelle MV_{U} comme si l'objet virtuel OV se collait à la main virtuelle MV_{U}, et par conséquent à la main réelle associée MR_{U}. Ainsi, tout mouvement de la main réelle MRU déclenche non seulement le même mouvement de la main virtuelle mais entraîne aussi le même mouvement de l'objet virtuel comme si la main réelle MR_{U} poussait l'objet virtuel OV simplement en étant plaquée contre celui-ci.

La [Fig.4b] illustre un schéma simplifié d'un deuxième cas d'usage de l'invention lorsque l'utilisateur effectue un geste continu avec sa main réelle.

Dans ce deuxième cas d'usage, la main virtuelle MV_{U} prend une posture de préhension adapté à l'objet virtuel OV quel que soit la posture de la main réelle MR_{U} associée tant que le geste continu gc est maintenu. Ainsi, tout mouvement de la main réelle MRU déclenche non seulement le même mouvement de la main virtuelle mais entraîne aussi le même mouvement de l'objet virtuel comme si la main réelle MR_{U} poussait l'objet virtuel OV simplement en étant plaquée contre celui-ci.

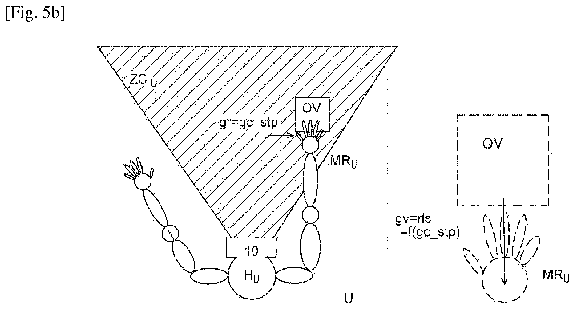

Les figures 5a et 5b montrent deux cas d'usage suite à une préhension virtuelle d'un objet virtuelle par un geste continu d'une main réelle de l'utilisateur selon l'invention.

L'utilisateur U est représenté vue du dessus. On voit sa tête H_{U}, ses épaules, ses bras et ses mains. Il est équipé d'un dispositif de réalité immersive 1 comportant une interface homme machine 10 notamment sous forme de casque de réalité immersive (ou HDM pour « Head Mounted Display » en anglais).

L'interface homme machine 10 dispose notamment d'une zone de traque des mains illustrée par le cône hachurée ZC_{U}. Cette zone de traque des mains est fonction des au moins une caméra équipant le dispositif de réalité immersive 1.

La [Fig.5a] illustre un schéma simplifié d'un cas d'usage de l'invention lorsque l'utilisateur déplace sa main réelle pendant un geste continu de cette main réelle.

L'utilisateur U effectue un geste gr avec sa main réelle MR_{U}, en l'occurrence un geste complémentaire gc+ au geste continu gc alors que sa main réelle MR_{U} est à proximité, voire sur, un objet virtuel OV. Le geste continu gc illustré par la [Fig.5a] est que le pouce touche l'index comme le montre la partie gauche de ces figures. Le geste complémentaire gc+ illustré est un déplacement de la main réelle dpr, en l'occurrence vers la gauche.

La main virtuelle MV_{U} garde la même posture que la main réelle MR_{U} associée, en l'occurrence à plat au-dessus de l'objet virtuel VR comme précédemment illustré par la [Fig.4a]. Le geste continu gc ayant alors déclenché une association de l'objet virtuel OV avec la main virtuelle MV_{U} comme si l'objet virtuel OV se collait à la main virtuelle MV_{U}, et par conséquent à la main réelle associée MR_{U}., alors le déplacement de la main réelle dpr ver la gauche déclenche non seulement le déplacement de la main virtuelle gv=dpv=f(dpr) vers la gauche mais entraîne aussi le même déplacement de l'objet virtuel dpv=f(dpr) comme si la main réelle MR_{U} poussait l'objet virtuel OV simplement en étant plaquée contre celui-ci.

La [Fig.5b] illustre un schéma simplifié d'un cas d'usage de l'invention lorsque l'utilisateur interromps un geste continu avec sa main réelle.

L'utilisateur U effectue un geste gr avec sa main réelle MR_{U}, en l'occurrence une interruption du geste continu gc_stp.

La main virtuelle MV_{U} garde la même posture que la main réelle MR_{U} associée, en l'occurrence à plat au-dessus de l'objet virtuel VR. Le geste d'interruption du geste continu gc_stp déclenche alors une dissociation de l'objet virtuel OV de la main virtuelle MV_{U} comme si l'objet virtuel OV se décollait de la main virtuelle MV_{U}, et par conséquent de la main réelle associée MR_{U}. Ainsi, un mouvement ultérieur de la main réelle MRU déclenche seulement le même mouvement de la main virtuelle. L'objet virtuel OV restera alors à la position dans laquelle il était lorsque la main réelle MR_{U} l'a relâché gc_stp.

Ainsi, l'invention propose une technique d'interaction simple qui consiste notamment à toucher du pouce son index adjacent. La détection de ce geste est effectuée en s'appuyant notamment sur génération d'une main virtuelle associée à une main réelle de l'utilisateur ou virtualisation d' une main réelle de l'utilisateur, en particulier par reconstruction de la main de l'utilisateur au moyen du casque de réalité immersive ou étendue qu'il porte ou par une caméra de profondeur reconstruisant la géométrie de la main). La géométrie de la main virtuelle de l'utilisateur permet de détecter le geste continu notamment le toucher du pouce sur l'index.

Cette technique d'interaction selon l'invention a plusieurs avantages :
- Elle évite de devoir porter un périphérique de saisie, notamment une interface manuelle tel qu'un anneau, et simplifie donc son usage dans un environnement réel, en particulier dans le cadre d'un environnement de travail comme l'activité d'un technicien réseau ;
- Elle est simple à réaliser ;
- Elle permet à l'utilisateur d'associer le toucher à l'interaction avec l'objet virtuel. L'utilisateur touche sa propre main pour avoir cette sensation de toucher que ne peut pas lui donner l'interaction avec un objet virtuel : Ainsi la sensation de toucher de l'objet virtuel est induite par le toucher de sa propre main nécessaire à l'interaction avec l'objet virtuel. Par conséquent, cela permet d'augmenter le nombre de modalité sensorimotrices impliquées par l'interaction ;
- Elle permet de lâcher l'objet virtuel facilement en supprimant cette sensation de toucher, notamment en éloignant son pouce de l'index ;
- Elle permet de pouvoir faire tourner l'objet dans sa main simplement en modifiant le toucher, notamment en glissant le pouce le long de l'index.

## Revendications

1. Procédé d'interaction avec un objet virtuel reproduit par un dispositif de réalité immersive comportant :
- lorsqu'une main virtuelle associée à une main réelle d'un utilisateur du dispositif de réalité immersive est à proximité d'un objet virtuel, détecter un geste continu de la main réelle, la détection de geste continu déclenchant une préhension par la main virtuelle de l'objet virtuel.

2. Procédé d'interaction selon la revendication précédente, dans lequel le procédé d'interaction comporte :
- prendre l'objet virtuel avec la main virtuelle dès qu'un geste continu de la main réelle est détecté.

3. Procédé d'interaction selon l'une des revendications précédentes, dans lequel le procédé d'interaction comporte :
- lorsque la main virtuelle tient un objet virtuel, détecter l'interruption du geste continu de la main réelle, la détection d'interruption de geste continu déclenchant la fin de la préhension de l'objet virtuel par la main virtuelle.

4. Procédé d'interaction selon l'une des revendications précédentes, dans lequel le procédé d'interaction comporte :
- lâcher l'objet virtuel tenu par la main virtuelle dès qu'une interruption du geste continu de la main réelle est détectée.

5. Procédé d'interaction selon l'une des revendications précédentes, dans lequel la préhension de l'objet virtuel par la main virtuelle est effectuée en fonction de l'orientation de la paume de la main virtuelle par rapport à l'objet virtuel lors de la détection du geste continu.

6. Procédé d'interaction selon l'une des revendications précédentes, dans lequel le procédé d'interaction comporte :
- lorsque la main virtuelle tient un objet virtuel, détecter un geste de la main réelle complémentaire du geste continu détecté, la détection du geste complémentaire déclenchant une rotation de l'objet virtuel dans la main virtuelle.

7. Procédé d'interaction selon l'une des revendications précédentes, dans lequel le geste continu détecté est un contact du pouce et de l'index de la main réelle.

8. Procédé d'interaction selon la revendication précédente, dans lequel le geste complémentaire détecté est un glissement du pouce contre l'index de la main réelle.

9. Procédé d'interaction selon l'une des revendications précédentes, dans lequel le procédé d'interaction comporte :
- allonger le bras virtuel rattaché à une main virtuelle associée à une main réelle se dirigeant vers un objet virtuel distant.

10. Procédé d'interaction selon la revendication précédente, dans lequel le procédé d'interaction comporte :
- utiliser une cartographie non-linéaire entre le mouvement de la main réelle capté dans l'environnement réel et le mouvement de la main virtuelle dans l'environnement immersive, le mouvement de la main virtuelle étant fonction du mouvement capté de la main réelle.

11. Programme comprenant des instructions de code de programme pour l'exécution des étapes du procédé d'interaction selon l'une quelconque des revendications précédentes lorsque ledit programme est exécuté par un processeur.

12. Dispositif de réalité immersive comportant :
- un dispositif de reproduction d'un objet virtuel ;
- une caméra apte à capter des mains réelles d'un utilisateur du dispositif de réalité immersive ;
- un détecteur de geste apte à détecter un geste continu de la main réelle, la détection de geste continu déclenchant une préhension par la main virtuelle de l'objet virtuel lorsqu'une main virtuelle associée à une main réelle d'un utilisateur du dispositif de réalité immersive est à proximité d'un objet virtuel.
